# EUROPÄISCHE PATENTANMELDUNG

(11) **EP 4 748 546 A1**
(43) Veröffentlichungstag der Anmeldung: **27.05.2026**
(21) Anmeldenummer: 25203110.9
(22) Anmeldetag: 18.09.2025
(51) Int. Cl.: B29C 45/00, B44C 1/16, B29C 45/14

(54) **VERFAHREN ZUM HERSTELLEN EINES MIT IN-MOLD-FLÄCHENELEMENTEN VERSEHENEN SPRITZGUSS-FORMKÖRPERS, IN-MOLD-FLÄCHENELEMENT-STREIFEN SOWIE VERWENDUNG DES IN-MOLD-FLÄCHENELEMENT-STREIFENS**

(30) Priorität: 24.09.2024 DE 102024127605
(71) Anmelder: Inotec Barcode Security GmbH, 24539 Neumünster (DE)
(72) Erfinder: Sparka, Ulf, 24534 Neumünster (DE); Meyer, Stefan, 24647 Wasbek (DE); Köhler, Thomas, 24623 Großenaspe (DE)
(74) Vertreter: Stork Bamberger Patentanwälte PartmbB

(57) **Zusammenfassung**

Bei einem In-Mold-Verfahren zum Herstellen eines mit einem In-Mold-Flächenelement (10) versehenen Spritzguss-Formkörpers (20), bei dem das In-Mold-Flächenelement (10) einen flächenförmigen Basisträger (101) und mindestens ein Identifikationselement (102, 105, 106, 107) sowie eine erste als Kontaktseite ausgebildete Seitenfläche und eine zweite als Oberflächenseite ausgebildete Seitenfläche aufweist, in eine Spritzgussform eingebracht wird, ist, wenn das In-Mold-Flächenelement (10) auf einem In-Mold-Flächenelement-Streifen (13) aus einem bandförmigen Liner (12) mit einer haftenden Schicht (11), auf dem eine Mehrzahl von In-Mold-Flächenelementen (10) aufgebracht und mittels der haftenden Schicht (11) temporär fixiert ist; zur Verfügung gestellt wird, der In-Mold-Flächenelement-Streifen (13) mittels eines Spende-Automaten (40) einer Greifeinrichtung (50) zugeführt wird; und die Greifeinrichtung (50) die In-Mold-Flächenelemente (10) auf deren Kontaktseite (108) greift, sie von dem Liner (12) trennt und in die leere Spritzgussform (30) einsetzt, das Verspenden der In-Mold-Flächenelemente (10) auf besonders einfache Weise möglich.

## Beschreibung

Die vorliegende Erfindung betrifft ein In-Mold-Verfahren zum Herstellen eines mit mindestens einem In-Mold-Flächenelement versehenen Spritzguss-Formkörpers, umfassend die Schritte
a) Bereitstellen einer Spritzgussform, die an ihrer inneren Oberfläche zur Aufnahme des In-Mold-Flächenelements ausgebildet ist,
b) Bereitstellen des In-Mold-Flächenelements,
   wobei das In-Mold-Flächenelement einen flächenförmigen Basisträger und mindestens ein Identifikationselement sowie eine erste Seitenfläche und eine zweite Seitenfläche aufweist, von denen die erste Seitenfläche als Kontaktseite ausgebildet und angepasst ist, um in dem In-Mold-Verfahren mit der Oberfläche eines dabei aus plastisch erweichter In-Mold-Formmasse spritzgegossenen Formteils zu dem Spritzguss-Formkörper verbunden zu werden und von denen die zweite Seitenfläche als Oberflächenseite ausgebildet und angepasst ist, im Verbund mit dem Formteil einen Teil der Oberfläche des Spritzguss-Formkörpers zu bilden, wobei der Basisträger aus einem Material besteht, das eine Zusammensetzung ist, die Polymere, insbesondere Polyolefine, Polyester oder Polycarbonate, und optional Füllstoffe umfasst, und das bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten aufweist wie die In-Mold-Formmasse des Formteils, und zumindest ein Teil der Oberfläche des Basisträgers einen freiliegenden Teil der Kontaktseite des In-Mold-Flächenelements bildet,
c) Einbringen des In-Mold-Flächenelements in die Spritzgussform,
d) Einspritzen der erweichten In-Mold-Formmasse in die Spritzgussform unter Verbinden des In-Mold-Flächenelements mit der In-Mold-Formmasse,
e) Abkühlen der In-Mold-Formmasse,
f) Entnehmen des aus Verbund des In-Mold-Flächenelements mit dem Formteil gebildeten Spritzguss-Formkörpers aus der Spritzgussform,
einen In-Mold-Flächenelement-Streifen, der für ein solches Verfahren ausgebildet ist und die Verwendung des In-Mold-Flächenelement-Streifens in dem In-Mold-Verfahren.

Bei der Überwachung logistischer Abläufe wie etwa dem Transport, der Lagerung, der Bearbeitung oder der Vermietung von Waren oder Gegenständen ist die Kenntnis des jeweils aktuellen Bestands sowie der genauen Position der einzelnen Waren innerhalb des Ablaufgeschehens von großer Bedeutung. Zu diesem Zweck werden die jeweiligen Waren mit Identifikationselementen versehen, die eine genaue Zuordnung erlauben.

Hierfür kommen Label mit optischen Identifikationselementen wie einfacher Schrift, Barcodes oder 2-D-Codes wie QR-Codes wie auch Label mit Identifikationselementen, die auf der Basis einer Funkerkennung mit RFID-Technologie arbeiten und als "RFID-Etikett", "RFID-Tag" oder "RFID-Label" bezeichnet werden, zum Einsatz.

Solche Identifikationselementlabel werden in den Gegenstand, der mittels dieser Label identifiziert werden soll, entweder nur lose eingelegt oder aber mit diesem verbunden. Soll das Etikett mit dem Gegenstand verbunden werden, so wird häufig eine Seite des Identifikationselementlabels mit einer Klebemasse beschichtet und mittels der Klebemasse an dem Gegenstand befestigt. Eine solche adhäsive Verbindung weist jedoch nur eine begrenzte Stabilität auf, so dass sich das Identifikationselementlabel infolge chemischer oder mechanischer Einwirkungen von dem Gegenstand wieder ablösen kann. Um dies zu vermeiden - insbesondere, um ein willentliches Ablösen des Identifikationselementlabels zu verhindern - ist es demnach erforderlich, das Identifikationselementlabel dauerhaft mit dem Gegenstand zu verbinden.

Dafür bietet sich das so genannte "In-Mold-Verfahren" an. Dieses Verfahren ist anwendbar bei solchen Waren oder Gegenständen, die als Formteile im Spritzgussverfahren gefertigt werden. Beim In-Mold-Verfahren wird das Identifikationselementlabel, im Folgenden als "In-Mold-Flächenelement" bezeichnet, in das leere Spritzgusswerkzeug eingelegt und gegebenenfalls an der Innenseite des Spritzgusswerkzeugs fixiert. Wird nun die erhitzte flüssige oder zähflüssige Formmasse in die Kavität des Spritzgusswerkzeugs eingespritzt, so verbindet sich beim Erhärten der Formmasse die hintere Seite des In-Mold-Flächenelements dauerhaft mit dem Formteil aus der erhärteten In-Mold-Formmasse und bildet so den fertigen Spritzguss-Formkörper. Beim In-Mold-Verfahren wird demzufolge durch Hinterspritzen des In-Mold-Flächenelements mit der heißen Formmasse eine stoffschlüssige Verbindung erhalten, wobei zusätzlich die Vorderseite des In-Mold-Flächenelements bündig mit der Oberfläche des Formteils abschließt.

Das Einlegen des In-Mold-Flächenelements in das Spritzgusswerkzeug erfolgt üblicherweise durch einen Roboter mittels "Pick and Place", indem die einzelnen In-Mold-Flächenelemente von einem Stapel aus einem Magazin entnommen und in das Spritzgusswerkzeug eingebracht werden. Aufgrund des Pick-and-Place-Vorgangs ist es üblich, dass die In-Mold-Flächenelemente als separate Einheiten vorliegen, die in Stapeln vertrieben und auch gestapelt in das Magazin eingebracht werden.

Diese Ausbildung als separate Einheiten und Verwendung im Stapel hat viele Vorzüge wie eine kompakte Form der Zuverfügungstellung, birgt jedoch auch Nachteile. So ist es oftmals gewünscht, dass die In-Mold-Flächenelement in vorgegebener Reihenfolge auf die zu kennzeichnende Gegenstände aufgebracht werden. Entsprechend sind die In-Mold-Flächenelemente im Stapel angeordnet. Wird ein Stapel während des Transportes oder beim Einbringen in das Magazin beschädigt, kann die Reihenfolge der In-Mold-Flächenelemente durcheinandergeraten, was unerwünschte Fehler bei der Kennzeichnung zur Folge hat. Dies gilt insbesondere für den Fall, dass immer zwei oder vier In-Mold-Flächenelemente mit übereinstimmenden Informationen vorhanden sind, weil ein Gegenstand nicht nur mit einem Label, sondern mit zwei oder vier In-Mold-Flächenelementen gekennzeichnet werden soll. Dies dient zum Beispiel dazu, dass eine Information von mehreren Seiten lesbar ist. Die In-Mold-Flächenelemente mit den übereinstimmenden Informationen müssen zwingend unmittelbar benachbart auf dem Stapel im Magazin vorhanden sein, damit sie auf demselben Gegenstand angebracht werden können. Gerät ein Stapel durcheinander, müssen die Label mühsam von Hand neu sortiert werden, oder der Stapel wird gesamt unbrauchbar. Dies gilt umso mehr, wenn es sich um RFID-In-Mold-Flächenelemente handelt, da jede Berührung der Leiterfläche die Gefahr birgt, dass diese, insbesondere aufgrund von elektrostatischer Aufladung, unbrauchbar wird.

Auch gibt es immer mehr Gegenstände, für die eine Kennzeichnung mit einem In-Mold-Flächenelement gewünscht wird, darunter auch kleine Gegenstände, für die entsprechend kleine In-Mold-Flächenelemente benötigt werden. Die Handhabung solcher kleinen Label auf Stapel ist mühsam und fehleranfällig.

Aufgabe der vorliegenden Erfindung war es daher, ein In-Mold-Verfahren zum Herstellen eines mit einem In-Mold-Flächenelement versehenen Spritzguss-Formkörpers zur Verfügung zu stellen, das die Handhabung der In-Mold-Flächenelemente, insbesondere das Einbringen der In-Mold-Flächenelemente in das Spritzgusswerkzeug, vereinfacht und ferner eine zuverlässige Kennzeichnung der zu kennzeichnenden Spritzguss-Formkörper sicherstellt.

Die Aufgabe wird erfindungsgemäß dadurch gelöst, dass bei einem Verfahren der eingangs genannten Art Schritt c) Folgendes umfasst:
- das In-Mold-Flächenelement wird auf einem In-Mold-Flächenelement-Streifen zur Verfügung gestellt, wobei der In-Mold-Flächenelement-Streifen aus einem bandförmigen Liner besteht, auf dem eine Mehrzahl von In-Mold-Flächenelementen aufgebracht und mittels einer haftenden Schicht temporär fixiert ist;
- der In-Mold-Flächenelement-Streifen wird mittels eines Spende-Automaten einer Greifeinrichtung zugeführt; und
- die Greifeinrichtung greift die In-Mold-Flächenelemente auf deren Kontaktseite, trennt sie von dem Liner und setzt sie in die leere Spritzgussform ein.

Indem die In-Mold-Flächenelemente auf einem Liner als Träger zur Verfügung gestellt werden, auf dem sie temporär fixiert sind, besteht keine Gefahr, dass die Label durcheinandergeraten und nicht in der gewünschten Reihenfolge verarbeitet werden können. Vielmehr ist ein Einbringen in die Spritzgussform in der richtigen Reihenfolge gewährleistet. Für den Fall, dass ein Gegenstand zwei oder mehr In-Mold-Flächenelemente mit der gleichen Information erhalten soll, kann dies durch das erfindungsgemäße Verfahren sichergestellt werden. Auch kleine In-Mold-Flächenelemente können problemlos verarbeitet werden, da sie bis zur Abnahme vom Liner durch die Greifeinrichtung fixiert auf dem Liner vorliegen. Sie können in dieser Form einfach transportiert werden, ohne dass die Gefahr besteht, dass die In-Mold-Flächenelemente durcheinandergeraten. Besonders bevorzugt ist der Liner mit der haftenden Schicht versehen. Es ist aber auch möglich, dass die haftende Schicht auf die In-Mold-Flächenelemente aufgebracht und der Liner darauf kaschiert wird. Der flächenförmige Basisträger kann eine beliebige flächenförmige geometrische Figur aufweisen, regelmäßig wie unregelmäßig.

Ein "wenigstens im wesentlichen gleiches Schrumpfungsverhalten und ein wenigstens im wesentlichen gleiches Schwindungsverhalten", das die In-Mold-Formmasse des Formteils und die des Basisträgers aufweisen müssen, bedeutet dabei, dass das Schrumpfungsverhalten und das Schwindungsverhalten des Materials des Basisträgers zu jedem Zeitpunkt des In-Mold-Verfahrens und nach Fertigstellung des Spritzguss-Formkörpers von der Art her (also hinsichtlich Expansion oder Kontraktion) identisch mit dem der In-Mold-Formmasse des Formteils sein und vom Ausmaß her in etwa so groß ausfallen muss wie das der In-Mold-Formmasse des Formteils (also insbesondere über ähnliche Längen-, Flächen und Raumausdehnungskoeffizienten verfügen muss), wobei der Unterschied der Ausdehnungskoeffizienten vorzugsweise maximal 10 %, besonders bevorzugt maximal 5 % und insbesondere maximal 1 % beträgt. Ganz besonders bevorzugt weist das Material des Basisträgers ein gleiches Schrumpfungsverhalten und ein gleiches Schwindungsverhalten auf wie die In-Mold-Formmasse des Formteils.

Das Material des Basisträgers ist eine Zusammensetzung, die Polymere, insbesondere Polyolefine, Polyester oder Polycarbonate, und optional Füllstoffe umfasst. "Umfasst" heißt dabei, dass das Material weitere Stoffe enthalten kann; besonders bevorzugt sind außer den genannten Polymeren und optional Füllstoffen keine weitere Stoffe enthalten. Als Füllstoffe kommen insbesondere Siliziumdioxidpartikel, Kieselsäurepartikel und/oder Pigmente in Frage.

Vorzugsweise ist das Identifikationselement mindestens ein Element ausgewählt aus der Gruppe, bestehend aus RFID-Element, Barcode-Element, 2-D-Code-Element wie z. B. ein QR-Code, Grafik-Element und Text-Element. Alle vorstehend genannten Ausführungsformen ermöglichen das Wiedergeben von Informationen über den gekennzeichneten Gegenstand. Welche Art von Identifikationselement besonders geeignet ist, hängt von dem zu kennzeichnenden Gegenstand, von den Informationen, die bereitgestellt werden sollen, und von weiteren Voraussetzungen ab wie der Umgebung, in der der Gegenstand benutzt, transportiert oder gelagert wird.

In einer weiteren bevorzugten Ausführungsform weist das In-Mold-Flächenelement mindestens zwei Identifikationselemente auf, von denen ein erstes ein RFID-Element ist, das auf der Kontaktseite angebracht ist, und ein zweites ein Barcode-Element oder ein 2D-Code-Element, z. B. ein QR-Code ist, das auf der Oberflächenseite angeordnet ist. Mit den maschinenlesbaren optischen Identifikationselemente in Form von Barcode-Element und 2D-Code-Element wird auf einfache Weise eine zentrale Überwachung und Verwaltung der damit gekennzeichneten Gegenstände ermöglicht. Zum Erfassen werden die Gegenstände an einem zumeist ortsfest installierten optischen Lesesystem vorbeigeführt, das die jeweiligen kodierten Daten mittels einer Leseeinheit optisch ausliest und an ein zentrales rechnergestütztes Verwaltungssystem weiterleitet. Zur Erfassung ist es dabei erforderlich, dass die Gegenstände beim Passieren des Lesesystems so angeordnet sind, dass zwischen der Leseeinheit und den einzelnen Identifikationselementen ein Sichtkontakt besteht.

Da eine solcher Sichtkontakt zwischen Identifikationselementen und Leseeinheit nicht immer gegeben und auch nicht immer möglich ist, ist es vorteilhaft, wenn das In-Mold-Flächenelement ein RFID-Element aufweist. Diese können von Lesesystemen, die auf der Basis einer Funkerkennung der Identifikationselemente arbeiten, gelesen werden und ermöglichen so eine berührungslose und sichtkontaktfreie Identifikation der gekennzeichneten Gegenstände. Die Anbringung des RFID-Elements auf der Kontaktseite ist vorteilhaft, weil das RFID-Element damit nach Anbringung im zu kennzeichnenden Gegenstand im Inneren dieses angeordnet und so vor äußeren Einwirkungen geschützt ist. Das optische Identifikationsobjekt hingegen muss lesbar sein und ist daher vorteilhaft auf der Oberflächenseite angeordnet.

In einer weiteren vorteilhaften Ausgestaltung ist der In-Mold-Flächenelement-Streifen als Rolle ausgebildet. Die Ausbildung als Rolle ist sehr platzsparend und ermöglicht einen einfachen Transport der In-Mold-Flächenelement-Streifen. Auch kann ein In-Mold-Flächenelement-Streifen in Rollenform gut in einen Spender eingeführt und für das Einbringen ist das Spritzgusswerkzeug bereitgestellt werden.

Besonders bevorzugt sind Liner und haftende Schicht transparent ausgebildet. Dies ermöglicht, dass ein visuelles Identifikationselement erkennbar bleibt, auch wenn haftende Schicht und Liner die Oberflächenseite des In-Mold-Flächenelements bedecken. Etwaige Informationen können daher in jedem Prozessschritt erkannt und verarbeitet werden. Weiter bevorzugt ist die haftende Schicht eine Haftklebemasse. Unter dem Begriff Haftklebemasse wird ein Stoff verstanden, der - insbesondere bei Raumtemperatur - dauerhaft klebrig sowie klebfähig ist. Ein Haftklebstoff kann durch Druck auf ein Substrat aufgebracht werden und bleibt dort haften. Besonders bevorzugt weist der Haftklebstoff eine Klebkraft von 3 N/cm oder weniger, besonders bevorzugt von 2 N/cm oder weniger, insbesondere von 1 N/cm oder weniger, auf.

Um sicherzustellen, dass ein In-Mold-Flächelement nach Einbringen in die Spritzgussform in dieser nicht verrutschen kann, sondern exakt an dem Ort verbleibt, an dem es angeordnet werden soll, ist es vorteilhaft, wenn das In-Mold-Flächenelement nach dem Einbringen in die Spritzgussform mittels Vakuum in der Spritzgussform gehalten wird.

Hierzu sind kleine Öffnungen in der Spritzgussform vorhanden, über die ein Vakuum angelegt wird. Dies ist besonders vorteilhaft, wenn das In-Mold-Flächenelement nicht am Boden der Spritzgussform eingebracht wird, sondern an einer Seitenwandung.

In einer besonders bevorzugten Weiterbildung der Erfindung ist die Oberflächenseite des In-Mold-Flächenelements mit einem Lack versehen. Dies ist insbesondere dann vorteilhaft, wenn die Oberflächenseite ein visuelles Element wie ein Barcode-Element, ein 2D-Code-Element, ein Grafik-Element oder ein Text-Element aufweist. Solche Elemente können mittels eines Lasers eingebrannt werden, üblicherweise jedoch werden sie aufgedruckt. Durch das Aufbringen einer Lackschicht werden die Druckfarbe oder Drucktinte vor äußeren Einflüssen geschützt. Besonders bevorzugt ist die Lackschicht transparent und farblos, da auf diese Weise das visuelle Element unverfälscht erkennbar bleibt. Weiterhin bevorzugt weist die Lackschicht eine Dicke von 1 bis 15 µm, besonders bevorzugt von 3 bis 10 µm, insbesondere von 5 bis 8 µm auf.

Ganz besonders bevorzugt bildet der Lack die haftende Schicht, mittels derer die In-Mold-Flächenelemente temporär auf dem Liner fixiert sind. Aufgrund der adhäsiven Eigenschaften der Lackschicht kann diese als haftende Schicht dienen, die die In-Mold-Flächenelemente auf dem Liner fixiert. Auf diese Weise ist keine zusätzliche Klebmasse erforderlich, was zum einen Material spart, zum anderen den weiteren Vorteil hat, dass keine unerwünschten Fremdstoffe, die ggf. in einem späteren Verfahrensschritt zu entfernen sind, auf die In-Mold-Flächenelemente aufgebracht werden müssen.

In einer bevorzugten Ausgestaltung ist die Klebkraft der haftenden Schicht gegenüber der Oberflächenseite der In-Mold-Flächenelemente größer als die Klebkraft der haftenden Schicht gegenüber dem Liner. So ist sichergestellt, dass sich die In-Mold-Flächenelemente gut vom Liner abnehmen lassen.

Besonders bevorzugt weist die haftende Schicht gegenüber der Oberflächenseite der In-Mold-Flächenelemente ein Klebkraft von mindestens 5 N/cm auf. Weiterhin bevorzugt weist die haftende Schicht gegenüber dem Liner eine Klebkraft von 3 N/cm oder weniger, besonders bevorzugt von 2 N/cm oder weniger, insbesondere von 1 N/cm oder weniger, auf.

In einer weiteren vorteilhaften Ausgestaltung der vorliegenden Erfindung umfasst die Herstellung des In-Mold-Flächenelement-Streifens folgende Schritte:
i) Beschichten des Liners mit einer Lackschicht
ii) Zuführen einer Bahn aus In-Mold-Flächenelementen
iii) Kaschieren der Bahn aus In-Mold-Flächenelementen mit dem mit der Lackschicht beschichteten Liner.

Auf den Liner, der als Endlosbahn bandförmig zugeführt wird, wird Lack aufgebracht. Dies kann insbesondere mit einer Lackiervorrichtung erfolgen, in der eine Transferwalze Lack aus einem Reservoir aufnimmt und auf eine Rasterwalze überträgt. Die Rasterwalze weist vorzugsweise eine Rakel auf, die überschüssigen Lack entfernt. Es entsteht ein definierter Lackfilm, der vorzugsweise eine Dicke von 1 bis 15 µm, besonders bevorzugt von 3 bis 10 µm, insbesondere von 5 bis 8 µm aufweist. Dieser Lackfilm ist vorzugsweise transparent und farblos, ebenso wie der Liner. Der Lackfilm kann Aussparungen aufweisen. Bevorzugt ist aber ein vollflächiger und durchgehender Lackfilm.

In einem nächsten Schritt wird eine Bahn aus In-Mold-Flächenelementen zugeführt, und der Lackfilm mit dem Liner wird auf die Bahn aus In-Mold-Flächenelementen kaschiert. Die Bahn aus In-Mold-Flächenelementen mit der Lackschicht auf dem Liner wird im Folgenden ausgehärtet. Die Aushärtung wird vorzugsweise durch Wärme oder UV-Bestrahlung unterstützt und beschleunigt. Man erhält die fertigen In-Mold-Flächenelemente mit Lacküberzug, die durch den Lack auf dem Liner fixiert sind.

In einem weiteren Schritt werden die einzelnen In-Mold-Flächenelemente in einer Stanzeinrichtung ausgestanzt. Die Stanzung erfolgt nur bis zur Lackschicht. Der Liner bleibt als Träger für die In-Mold-Flächenelemente in Form einer zusammenhängenden Bahn erhalten.

Abhängig von der Anordnung der In-Mold-Flächenelemente auf dem Liner und der Breite der Bahn kann die Bahn direkt dem Schritt des Abnehmens der In-Mold-Flächenelemente - auch als "Verspenden" bezeichnet - zum Einbringen in die Spritzgussformzugeführt werden. Sind auf der Bahn in Querrichtung mehrere In-Mold-Flächenelemente nebeneinander angeordnet, kann die Bahn bevorzugt zunächst in Streifen, insbesondere in Längsstreifen in Transportrichtung, geschnitten werden. In dieser Form, insbesondere als Rolle aufgerollt, lassen sich die In-Mold-Flächenelement-Streifen besonders gut lagern und transportieren.

Für den Fall, dass die In-Mold-Flächenelemente nicht unmittelbar aneinander anstoßend auf dem Liner angeordnet sind, schließt sich alternativ oder zusätzlich vor dem Verspenden noch ein Schritt an, in dem die überschüssigen Bereich der In-Mold-Flächenelement-Bahn entfernt werden. Die Lackschicht, die eine höhere Klebkraft gegenüber dem Material der In-Mold-Flächenelement-Bahn aufweist als gegenüber dem Liner, haftet auf den überschüssigen Bereichen der In-Mold-Flächenelement-Bahn und erleichtert ein einfaches Abtrennen der üblicherweise gitterförmigen überschüssigen Bereiche der In-Mold-Flächenelement-Bahn.

Sofern das In-Mold-Flächenelement ein RFID-Element als Identifikationselement aufweist, erfolgt vor dem Verspenden noch das Aufbringen von Chip und Antenne auf die Kontaktseite des In-Mold-Flächenelements. Das In-Mold-Flächenelement befindet sich weiterhin auf dem Liner, so dass ein Transport der In-Mold-Flächenelemente und deren Bestückung mit Chip und Antenne einfach und zuverlässig möglich ist. Wenn der Chip individuell programmiert werden soll, kann dies z. B. nach der Bestückung und vor dem Verspenden des In-Mold-Flächenelements erfolgen.

Die vorliegende Erfindung betrifft auch einen In-Mold-Flächenelement-Streifen, der aus einem bandförmigen Liner besteht, auf dem eine Mehrzahl von In-Mold-Flächenelementen aufgebracht und mittels einer haftenden Schicht temporär fixiert ist, wobei jedes In-Mold-Flächenelement einen flächenförmigen Basisträger und mindestens ein Identifikationselement sowie eine erste Seitenfläche und eine zweite Seitenfläche aufweist, von denen die erste Seitenfläche als Kontaktseite ausgebildet und angepasst ist, um in dem In-Mold-Verfahren mit der Oberfläche eines dabei aus plastisch erweichter In-Mold-Formmasse spritzgegossenen Formteils zu dem Spritzguss-Formkörper verbunden zu werden, und von denen die zweite Seitenfläche also Oberflächenseite ausgebildet und angepasst ist, im Verbund mit dem Formteil einen Teil der Oberfläche des Spritzguss-Formkörpers zu bilden, wobei der Basisträger aus einem Material besteht, das eine Zusammensetzung ist, die Polymere, insbesondere Polyolefine, Polyester oder Polycarbonate, und optional Füllstoffe umfasst, und das bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten aufweist wie die In-Mold-Formmasse des Formteils, und zumindest ein Teil der Oberfläche des Basisträgers einen freiliegenden Teil der Kontaktseite des In-Mold-Flächenelements bildet, wobei dieser In-Mold-Flächenelement-Streifen für das Verfahren der vorliegenden Erfindung ausgebildet und angepasst ist. Besonders bevorzugt ist der Liner mit der haftenden Schicht versehen.

Mit einem solchen In-Mold-Flächenelement-Streifen ist eine einfache und sichere Handhabung der In-Mold-Flächenelemente möglich. Insbesondere kann sichergestellt werden, dass die In-Mold-Flächenelemente in einer vorgegebenen Reihenfolge verbleiben und in dieser auf die zu kennzeichnenden Gegenstände aufgebracht werden. Im Falle von RFID-Identifikationselementen ist eine geordnete Programmierung der RFID-Chips besonders einfach möglich.

Sämtliche vorstehend für das In-Mold-Verfahren beschriebenen Ausführungen und Vorteile gelten entsprechend auch für den In-Mold-Flächenelement-Streifen. Umgekehrt gelten alle im Folgenden beschriebenen Vorteile und Ausführungen entsprechend auch für das In-Mold-Verfahren. Einige besonders vorteilhafte Weiterbildungen des In-Mold-Flächenelement-Streifens sind im Folgenden noch einmal herausgehoben:

In einer besonders vorteilhaften Gestaltung ist das Identifikationselement mindestens ein Element ausgewählt aus der Gruppe, bestehend aus RFID-Element, Barcode-Element, 2-D-Codelement, z. B. ein QR-Code, Grafik-Element und Text-Element. Visuelle Elemente wie Grafik-Element oder Text-Element erlauben, die enthaltenen Informationen durch den Benutzer einfach und ohne Zuhilfenahme weiterer Hilfsmittel zu entnehmen und zu erfassen. Barcode- und 2D-Code-Elemente bieten die Möglichkeit, auf sehr kleinem Raum eine Große Menge an Informationen bereitzustellen, während die Codes gleichzeitig auf einfache Art aufgebracht werden können, nämlich insbesondere durch Aufdrucken. RFID-Elemente machen das berührungs- und sichtkontaktfreie Auslesen von Informationen möglich, so dass die Ausrichtung des gekennzeichneten Gegenstandes zum Lesegerät keine kritische Bedeutung hat.

Weiterhin bevorzugt weist jedes In-Mold-Flächenelement mindestens zwei Identifikationselemente auf, von denen ein erstes ein RFID-Element ist, das auf der Kontaktseite angebracht ist, und ein zweites ein Barcode-Element oder ein 2D-Code-Element, z. B. ein QR-Code ist, das auf der Oberflächenseite angeordnet. Ebenso können ein RFID-Element und ein Text- oder ein grafisches Element kombiniert werden oder mehr als zwei Identifikationselemente vorgesehen sein. Es ist so möglich, Informationen auf verschiedene Weisen bereitzustellen und auf verschiedenem Wege auszulesen, so dass unterschiedlichen Lese-Systemen auf Benutzerseite Rechnung getragen wird.

In noch einer bevorzugten Ausgestaltung ist der In-Mold-Flächenelement-Streifen rollenförmig ausgebildet, d. h. er wird nach seiner Herstellung zu einer Rolle aufgewickelt. Damit wird er besonders kompakt und lässt sich noch einfacher lagern, transportieren und auch weiterverarbeiten.

Besonders vorteilhaft ist es, wenn Liner und haftende Schicht transparent ausgebildet sind. Da beide auf der Oberflächenseite angeordnet sind, die häufig mit einem visuellen Identifikationselement versehen ist, bleibt dieses visuelle Identifikationselement gut zugänglich und sichtbar sowie lesbar, obwohl die weiteren Schichten aufgebracht sind. Es ist auch möglich, dass Liner und/oder haftende Schicht eingefärbt sind, eine farblose Ausgestaltung ist jedoch besonders vorteilhaft, da ein etwaiges Verfälschen der visuellen Information durch Liner und/oder haftende Schicht minimiert wird.

Weiterhin ist es besonders vorteilhaft, wenn die Oberflächenseite des In-Mold-Flächenelements mit einem Lack versehen ist. Ein solcher Lack schützt etwaige visuelle Elemente, die üblicherweise aufgedruckt werden. Druckfarben oder -tinten sind auf diese Weise Umwelteinflüssen deutlich weniger ausgesetzt. Damit ist man in der Wahl von Farben und Tinten sehr viel freier, weil beispielsweise eine Wasserlöslichkeit wegen des Lacküberzugs unkritisch ist.

Ganz besonders vorteilhaft bildet der Lack die haftende Schicht, mittels derer die In-Mold-Flächenelemente temporär auf dem Liner fixiert sind. Damit übernimmt der Lack eine Doppelfunktion, Schutz visueller Identifikationselemente auf der einen Seite und Fixierung der In-Mold-Flächenelemente auf dem Liner auf der anderen. Durch die Adhäsionskräfte des Lackes, wenn dieser getrocknet ist, wird eine sichere Fixierung der In-Mold-Flächenelemente auf dem Liner sichergestellt. Vorteilhafterweise ist die Klebkraft des Lackes auf dem Liner dabei geringer als die auf dem In-Mold-Flächenelement, damit der Liner zu gegebener Zeit einfach von dem In-Mold-Flächenelement abgezogen werden kann.

In noch einer anderen vorteilhaften Ausgestaltung weist das Material des Basisträgers des In-Mold-Flächenelements ein wenigstens im wesentlichen gleiches Schrumpfungsverhalten und ein wenigstens im wesentlichen gleiches Schwindungsverhalten auf wie der Liner. Damit kann vermieden werden, dass es bei einer Erwärmung des gesamten Streifens, also sowohl des In-Mold-Flächenelements wie auch des Liners zu Verformungen und/oder zu Faltenbildung kommt, weil die Ausdehnung von In-Mold-Flächenelement und Liner gleich ist. Solche Erwärmung tritt z. B. auf, wenn die In-Mold-Flächenelemente mit dem RFID-Element ausgestattet werden. Die Antenne des RFID-Elements wird regelmäßig durch eine Silberleitpaste gebildet, die zunächst aufgetragen wird und im Anschluss getrocknet werden muss, wozu die In-Mold-Flächenelemente üblicherweise einen Wärmetunnel durchlaufen.

Schließlich betrifft die vorliegende Erfindung auch die Verwendung des erfindungsgemäßen In-Mold-Flächenelement-Streifens in dem erfindungsgemäßen In-Mold-Verfahren.

Die mit der vorliegenden Erfindung erzielbaren Vorteile wurden bereits im Zusammenhang mit der erfindungsgemäßen Vorrichtung sowie der erfindungsgemäßen Anordnung zuvor im Detail beschrieben. Zur Vermeidung von Wiederholungen verweisen wir auch im Zusammenhang mit dem erfindungsgemäßen Verfahren auf die dort genannten Vorteile, die hier in gleicher Weise gelten.

Auf die genannten und noch andere zweckmäßige und vorteilhafte Ausgestaltungen der Erfindung sind Unteransprüche gerichtet. Besonders zweckmäßige und vorteilhafte Ausbildungsformen und -möglichkeiten werden anhand der in der schematischen Zeichnung dargestellten Ausführungsbeispiele näher beschrieben. Jede beschriebene Einzel- oder Detailgestaltung innerhalb eines Ausführungsbeispiels ist als strukturell selbstständiges Detailbeispiel für andere nicht oder nicht vollständig beschriebene, unter die Erfindung fallende Ausführungen und Gestaltungen zu verstehen.

Es zeigt/zeigen
- Fig. 1a und 1b: eine Ausführungsform eines erfindungsgemäßen In-Mold-Flächenelement-Streifens in perspektivischer Draufsicht und Untersicht,
- Fig. 2: eine schematische Darstellung eines erfindungsgemäßen In-Mold-Flächenelement-Streifens im Querschnitt
- Fig. 3: den Schritt des Bereitstellens des In-Mold-Flächenelements,
- Fig. 4a bis 4c: die Herstellung des Spritzguss-Formkörpers und
- Fig. 5: das Aufbringen der haftenden Schicht in einer Ausführungsform, in der die haftende Schicht als Lackschicht ausgebildet ist.

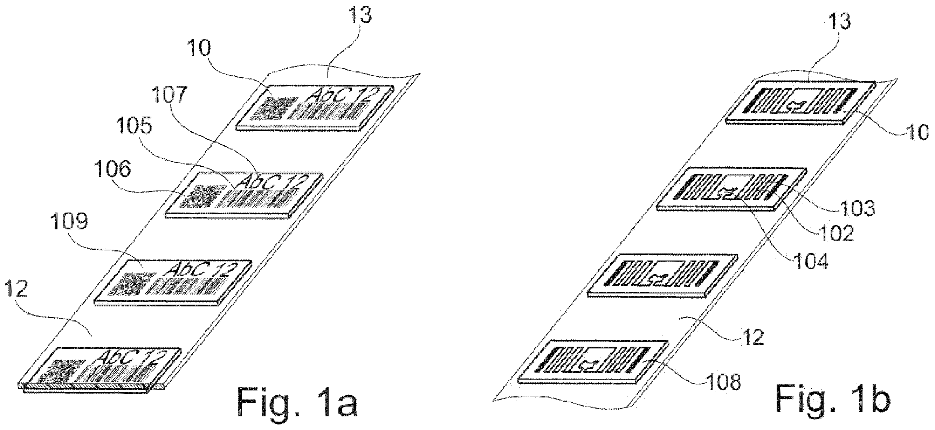

Fig. 1a zeigt eine Ausführungsform eines Abschnitts eines erfindungsgemäßen In-Mold-Flächenelement-Streifens 13 in perspektivischer Draufsicht. Vier In-Mold-Flächenelemente 10 sind mittels einer transparenten und daher nicht sichtbaren haftenden Schicht 11 beabstandet auf einem Liner 12 fixiert. Die In-Mold-Flächenelemente 10 weisen jeweils ein Barcode-Element 105, ein 2D-Code-Element 106 sowie ein Text-Element 107 auf. Die dem Liner 12 zugewandte Seite ist die Oberflächenseite 109 des In-Mold-Flächenelements 10, die im fertigen Spritzguss-Formkörper 20 im Verbund mit dem Formteil einen Teil der Oberfläche des Spritzguss-Formkörpers bildet.

Fig. 1b zeigt die in Fig. 1a gezeigte Ausführungsform eines Abschnitts des erfindungsgemäßen In-Mold-Flächenelement-Streifens 13 in perspektivischer Untersicht. Die In-Mold-Flächenelemente 10 zeigen mit ihrer Kontaktseite 108 nach oben. Auf jedem In-Mold-Flächenelement 10 ist ein RFID-Element 102 mit Antenne 103 und Chip 104 angeordnet. Mit der in Fig. 1b nach unten gewandten Oberflächenseite sind die In-Mold-Flächenelemente auf dem Liner 12 fixiert.

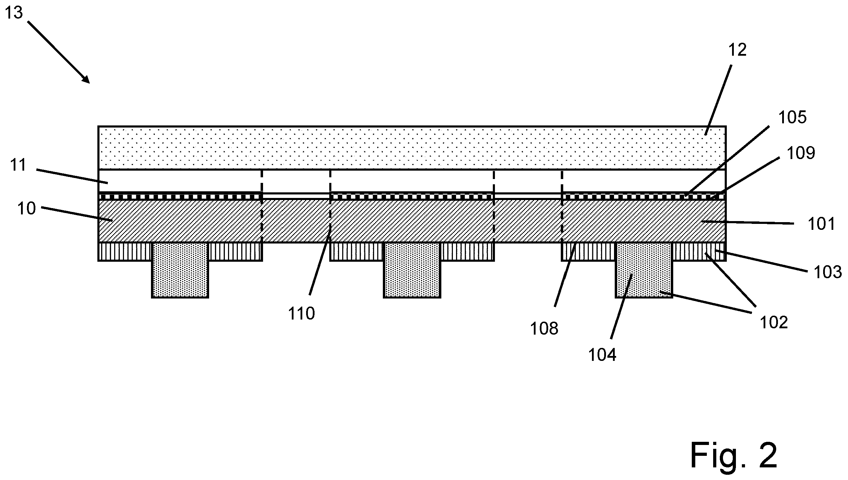

Fig. 2 ist eine schematische Darstellung einer weiteren Ausführungsform eines erfindungsgemäßen In-Mold-Flächenelement-Streifens 13 im Querschnitt. Der In-Mold-Flächenelement-Streifen 13 weist drei beabstandet nebeneinander angeordnete In-Mold-Flächenelemente 10 auf. Jedes In-Mold-Flächenelement 10 weist einen Basisträger 101 auf, der auf seiner Oberflächenseite 109 mit einem visuellen Element wie einem Barcode-Element 105 bedruckt ist. Auf seiner Kontaktseite 108 weist jedes In-Mold-Flächenelement 10 ein RFID-Element 102, umfassend Antenne 103 sowie Chip 104, auf. Über die haftende Schicht 11 sind die In-Mold-Flächenelemente 10 auf dem Liner 12 fixiert. Die visuellen Elemente und die RFID-Elemente 102 erstrecken sich nur über einen Teil des Querschnitts, da die In-Mold-Flächenelemente 10 beabstandet zueinander angeordnet sind. Basisträger 101, haftende Schicht 11 sowie Liner 12 hingegen erstrecken sich über den gesamten Querschnitt. Vor dem Verspenden der In-Mold-Flächenelemente 10 müssen diese daher ausgestanzt werden. Dies erfolgt an den Stanzlinien 110. Der Liner 12 wird nicht mit gestanzt, sondern verbleibt als durchgehender Träger der ausgestanzten In-Mold-Flächenelemente 10. Das entstehende Gitter aus den nicht zu den In-Mold-Flächenelementen 10 gehörenden Teilen des Basisträgers 101 und der haftenden Schicht 11 wird vor dem Verspenden entfernt.

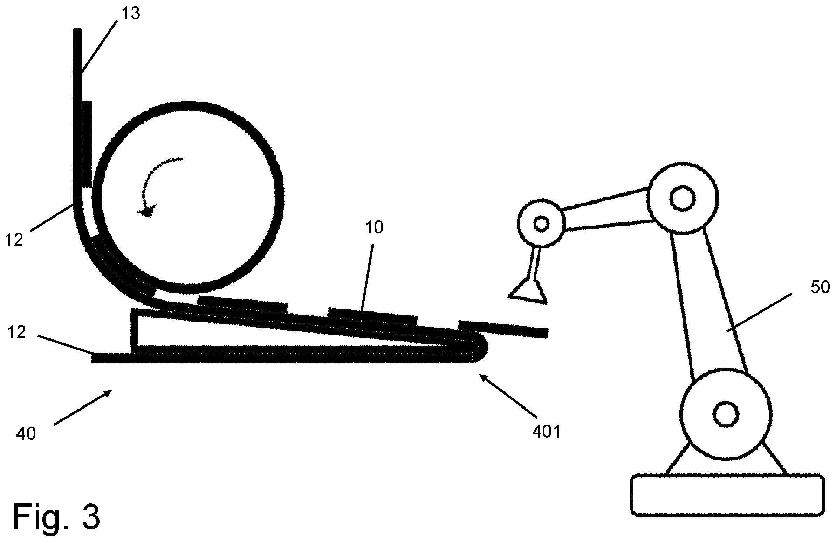

Fig. 3 veranschaulicht den Schritt des Bereitstellens des In-Mold-Flächenelements 10, der auch als Spendevorgang bezeichnet werden kann. Ein In-Mold-Flächenelement-Streifen 13 wird auf einem Spende-Automaten 40 bereitgestellt. In der in Fig. 3 gezeigten Ausführungsform ist der In-Mold-Flächenelement-Streifen 13 einreihig mit In-Mold-Flächenelementen 10 versehen, d. h. es ist in Querrichtung jeweils nur eine In-Mold-Flächenelement 10 auf dem Liner 12 angeordnet. Der Liner 12 des In-Mold-Flächenelement-Streifens 13 wird über eine Spendekante 401 geführt, an welcher sich das In-Mold-Flächenelement 10 vom Liner 12 löst und von einer Greifeinrichtung 50 abgenommen wird.

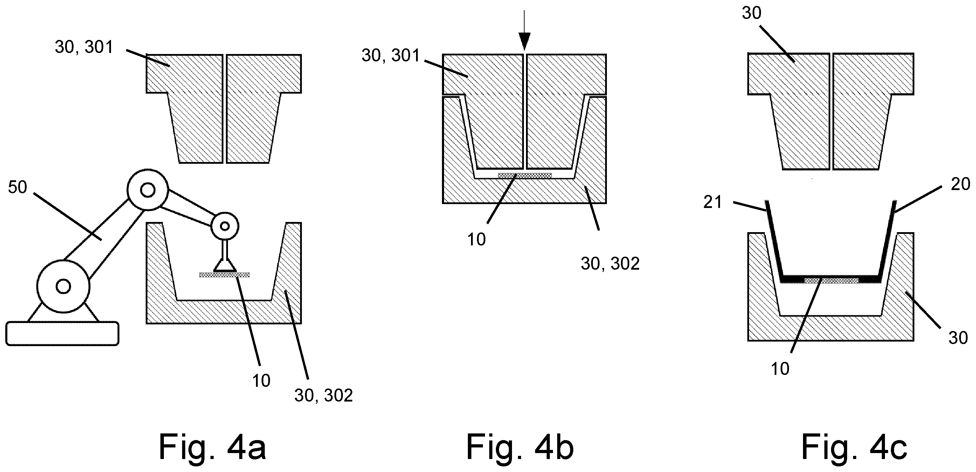

In Fig. 4a bis 4c ist die Herstellung eines mit einem In-Mold-Flächenelement 10 versehenen Spritzguss-Formkörpers 20 gezeigt.

In Fig. 4a ist gezeigt, wie das In-Mold-Flächenelement 10 von der Greifeinrichtung 50 in die Auswerferseite 302 einer Spritzgussform 30 eingebracht wird. Das In-Mold-Flächenelement 10 wird in der in Fig. 4a gezeigten Ausführungsform auf den Boden der Spritzgussform 30 angeordnet. Ebenso ist eine Anordnung z. B. an einer oder mehreren Seiten möglich. Zur temporären Fixierung des In-Mold-Flächenelements kann über eine (nicht gezeigte) Öffnung an der Stelle, an der das In-Mold-Flächenelement gehalten werden soll, eine Öffnung zum Anlegen eines Vakuums vorgesehen sein.

Fig. 4b zeigt die geschlossene, aus Düsenseite 301 und Auswerferseite 302 zusammengefügte Spritzgussform 30. Der Pfeil deutet das Einspritzen der erweichten In-Mold-Formmasse in die Spritzgussform 30 an. Während des Einspritzens verbindet sich das In-Mold-Flächenelement 10 mit der In-Mold-Formmasse. Die In-Mold-Formmasse wird abgekühlt und so der Spritzguss-Formkörper gebildet.

Fig. 4c zeigt den fertigen mit dem In-Mold-Flächenelement 10 verbundenen Spritzguss-Formkörper 20, der nach dem Öffnen der Spritzgussform 30 aus dieser entnommen werden kann.

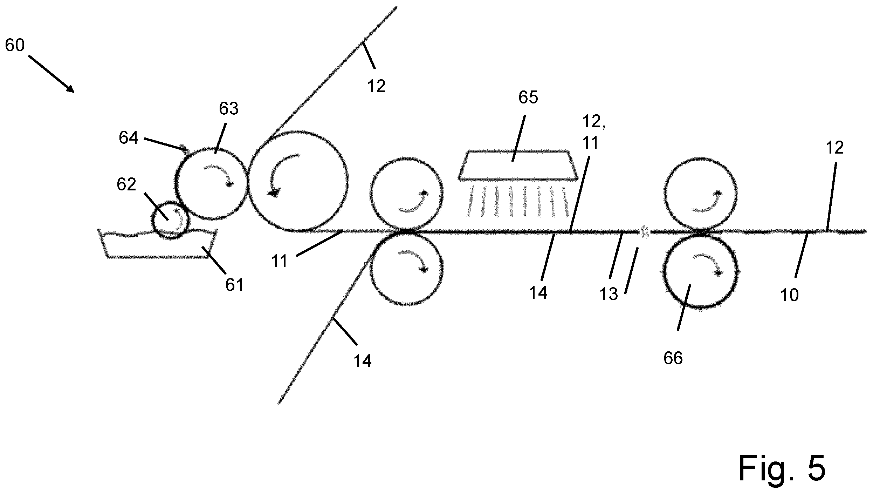

Fig. 5 veranschaulicht das Aufbringen der haftenden Schicht 11 in einer Ausführungsform, in der die haftende Schicht 11 als Lackschicht ausgebildet ist.

Auf Liner 12, der als Endlosbahn bandförmig zugeführt wird, wird mit einer Lackiervorrichtung 60 Lack aufgebracht. Die Lackiervorrichtung 60 umfasst eine Transferwalze 62, die Lack aus einem Reservoir 61 aufnimmt und auf eine Rasterwalze 63 überträgt. Die Rasterwalze 63 weist vorzugsweise eine Rakel 64 auf, die überschüssigen Lack entfernt. Es entsteht ein definierter Lackfilm auf dem Liner 12. Dieser Lackfilm ist vorzugsweise transparent und farblos, ebenso wie der Liner 12. Der Lackfilm ist in der gezeigten Ausführungsform als vollflächiger und durchgehender Lackfilm ausgebildet.

In einem nächsten Schritt wird eine Bahn 14 aus In-Mold-Flächenelementen zugeführt, und der Lackfilm mit dem Liner 12 wird auf die Bahn 14 aus In-Mold-Flächenelementen kaschiert. Die Bahn aus In-Mold-Flächenelementen 10 mit der Lackschicht auf dem Liner 12 wird im Folgenden ausgehärtet. Die Aushärtung wird durch Wärme-Bestrahlung oder UV-Licht 65 unterstützt und beschleunigt. Man erhält den fertigen In-Mold-Flächenelement-Streifen 13, auf dem die In-Mold-Flächenelemente 10 mit Lacküberzug, durch den Lack als haftende Schicht 11 auf dem Liner 12 fixiert sind.

In einem weiteren Schritt werden die einzelnen In-Mold-Flächenelemente 10 in einer Stanzeinrichtung 66 ausgestanzt. Die Stanzung erfolgt nur bis zur als Lackschicht ausgebildeten haftenden Schicht 11. Der Liner 12 bleibt als Träger für die In-Mold-Flächenelemente 10 in Form einer zusammenhängenden Bahn erhalten.

Für den Fall, dass die In-Mold-Flächenelemente 10 nicht unmittelbar aneinander anstoßend auf dem Liner 12 angeordnet sind, schließt sich alternativ oder zusätzlich noch ein (nicht gezeigter) Schritt an, in dem die überschüssigen Bereich der In-Mold-Flächenelement-Bahn entfernt werden. Die Lackschicht, die eine höhere Klebkraft gegenüber dem Material der In-Mold-Flächenelement-Bahn aufweist als gegenüber dem Liner 12, haftet auf den überschüssigen Bereichen der In-Mold-Flächenelement-Bahn und erleichtert ein einfaches Abtrennen der üblicherweise gitterförmigen überschüssigen Bereiche der In-Mold-Flächenelement-Bahn.

Sofern das In-Mold-Flächenelement 10 ein RFID-Element 102 als Identifikationselement aufweist, erfolgt vor dem Verspenden noch das Aufbringen von Chip 104 und Antenne 103 auf die Kontaktseite 108 des In-Mold-Flächenelements 10. Bei diesem ebenfalls nicht gezeigten Arbeitsgang befindet sich das In-Mold-Flächenelement 10 weiterhin auf dem Liner 12, so dass ein Transport der In-Mold-Flächenelemente 10 und deren Bestückung mit Chip 104 und Antenne 103 einfach und zuverlässig möglich ist. Nach der Bestückung und vor dem Verspenden erfolgt die Programmierung des Chips 104 des In-Mold-Flächenelements 10. Wenn der Chip 104 individuell programmiert werden soll, kann dies z. B. nach der Bestückung und vor dem Verspenden des In-Mold-Flächenelements 10 erfolgen.

## Patentansprüche

1. In-Mold-Verfahren zum Herstellen eines mit mindestens einem In-Mold-Flächenelement (10) versehenen Spritzguss-Formkörpers (20), umfassend die Schritte
a) Bereitstellen einer Spritzgussform (30), die an ihrer inneren Oberfläche zur Aufnahme des In-Mold-Flächenelements (10) ausgebildet ist,
b) Bereitstellen des In-Mold-Flächenelements (10),
wobei das In-Mold-Flächenelement (10) einen flächenförmigen Basisträger (101) und mindestens ein Identifikationselement (102, 105, 106, 107) sowie eine erste Seitenfläche und eine zweite Seitenfläche aufweist,
von denen die erste Seitenfläche als Kontaktseite (108) ausgebildet und angepasst ist, um in dem In-Mold-Verfahren mit der Oberfläche eines dabei aus plastisch erweichter In-Mold-Formmasse spritzgegossenen Formteils (21) zu dem Spritzguss-Formkörper (20) verbunden zu werden und von denen die zweite Seitenfläche als Oberflächenseite (109) ausgebildet und angepasst ist, im Verbund mit dem Formteil (21) einen Teil der Oberfläche des Spritzguss-Formkörpers (20) zu bilden,
wobei der Basisträger (101) aus einem Material besteht, das eine Zusammensetzung ist, die Polymere, insbesondere Polyolefine, Polyester oder Polycarbonate, und optional Füllstoffe umfasst, und das bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten aufweist wie die In-Mold-Formmasse des Formteils (21), und zumindest ein Teil der Oberfläche des Basisträgers (101) einen freiliegenden Teil der Kontaktseite (108) des In-Mold-Flächenelements (10) bildet,
c) Einbringen des In-Mold-Flächenelements (10) in die Spritzgussform (30),
d) Einspritzen der erweichten In-Mold-Formmasse in die Spritzgussform (30) unter Verbinden des In-Mold-Flächenelements (10) mit der In-Mold-Formmasse,
e) Abkühlen der In-Mold-Formmasse,
f) Entnehmen des aus Verbund des In-Mold-Flächenelements (10) mit dem Formteil (21) gebildeten Spritzguss-Formkörpers (20) aus der Spritzgussform,
**dadurch gekennzeichnet, dass** Schritt c) Folgendes umfasst:
- das In-Mold-Flächenelement (10) wird auf einem In-Mold-Flächenelement-Streifen (13) zur Verfügung gestellt, wobei der In-Mold-Flächenelement-Streifen (13) aus einem bandförmigen Liner (12) besteht, auf dem eine Mehrzahl von In-Mold-Flächenelementen (10) aufgebracht und mittels einer haftenden Schicht (11) temporär fixiert ist;
- der In-Mold-Flächenelement-Streifen (13) wird mittels eines Spende-Automaten (40) einer Greifeinrichtung (50) zugeführt; und
- die Greifeinrichtung (50) greift die In-Mold-Flächenelemente (10) auf deren Kontaktseite (108), trennt sie von dem Liner (12) und setzt sie in die leere Spritzgussform (30) ein.

2. In-Mold-Verfahren nach Anspruch 1, **dadurch gekennzeichnet**, **dadurch gekennzeichnet, dass** das Identifikationselement (102, 105, 106, 107) mindestens ein Element ausgewählt aus der Gruppe, bestehend aus RFID-Element (102), Barcode-Element (105), 2D-Code-Element (106), Grafik-Element und Text-Element (107) ist.

3. In-Mold-Verfahren nach Anspruch 1 oder 2, **dadurch gekennzeichnet**, **dadurch gekennzeichnet, dass** das In-Mold-Flächenelement (10) mindestens zwei Identifikationselemente ((102, 105, 106, 107) aufweist, von denen ein erstes ein RFID-Element (102) ist, das auf der Kontaktseite (108) angebracht ist, und ein zweites ein Barcode-Element (105) oder ein 2D-Code-Element (106) ist, das auf der Oberflächenseite (109) angeordnet ist.

4. In-Mold-Verfahren nach einem der Ansprüche 1 bis 3, **dadurch gekennzeichnet**, **dadurch gekennzeichnet, dass** der In-Mold-Flächenelement-Streifen (13) als Rolle ausgebildet ist.

5. In-Mold-Verfahren nach einem der Ansprüche 1 bis 4, **dadurch gekennzeichnet**, **dadurch gekennzeichnet, dass** Liner (12) und haftende Schicht (11) transparent ausgebildet sind.

6. In-Mold-Verfahren nach einem der Ansprüche 1 bis 5, **dadurch gekennzeichnet**, **dadurch gekennzeichnet, dass** das In-Mold-Flächenelement (10) nach dem Einbringen in die Spritzgussform (30) mittels Vakuum in der Spritzgussform (30) gehalten wird.

7. In-Mold-Verfahren nach einem der Ansprüche 1 bis 6, **dadurch gekennzeichnet**, **dadurch gekennzeichnet, dass** die Oberflächenseite (109) des In-Mold-Flächenelements (10) mit einem Lack versehen ist, wobei der Lack die haftende Schicht (11) bildet, mittels derer die In-Mold-Flächenelemente (10) temporär auf dem Liner (12) fixiert sind.

8. In-Mold-Verfahren nach Anspruch 7, **dadurch gekennzeichnet, dass** die Herstellung des In-Mold-Flächenelement-Streifens (13) folgende Schritte umfasst:
i) Beschichten des bandförmigen Liners (12) mit einer Lackschicht
ii) Zuführen einer Bahn (14) aus In-Mold-Flächenelementen
iii) Kaschieren der Bahn (14) aus In-Mold-Flächenelementen mit dem mit der Lackschicht beschichteten Liner (12).

9. In-Mold-Flächenelement-Streifen (13), der aus einem bandförmigen Liner (12) besteht, der mit einer haftenden Schicht (11) versehen ist und auf dem eine Mehrzahl von In-Mold-Flächenelementen (10) aufgebracht und mittels der haftenden Schicht (11) temporär fixiert ist,
wobei jedes In-Mold-Flächenelement (10) einen flächenförmigen Basisträger (101) und mindestens ein Identifikationselement (102, 105, 106, 107) sowie eine erste Seitenfläche und eine zweite Seitenfläche aufweist,
von denen die erste Seitenfläche als Kontaktseite (108) ausgebildet und angepasst ist, um in dem In-Mold-Verfahren mit der Oberfläche eines dabei aus plastisch erweichter In-Mold-Formmasse spritzgegossenen Formteils (21) zu dem Spritzguss-Formkörper (20) verbunden zu werden
und von denen die zweite Seitenfläche als Oberflächenseite (109) ausgebildet und angepasst ist, im Verbund mit dem Formteil (21) einen Teil der Oberfläche des Spritzguss-Formkörpers (20) zu bilden,
wobei der Basisträger (101) aus einem Material besteht, das eine Zusammensetzung ist, die Polymere, insbesondere Polyolefine, Polyester oder Polycarbonate, und optional Füllstoffe umfasst, und das bei Temperaturen unterhalb der Temperatur der plastisch erweichten In-Mold-Formmasse ein wenigstens im wesentlichen gleiches Schrumpfungsverhalten und ein wenigstens im wesentlichen gleiches Schwindungsverhalten aufweist wie die In-Mold-Formmasse des Formteils (21), und zumindest ein Teil der Oberfläche des Basisträgers (101) einen freiliegenden Teil der Kontaktseite (108) des In-Mold-Flächenelements (10) bildet,
**dadurch gekennzeichnet, dass** der In-Mold-Flächenelement-Streifen (13) für ein Verfahren nach einem der Ansprüche 1 bis 8 ausgebildet und angepasst ist.

10. In-Mold-Flächenelement-Streifen (13) nach Anspruch 9, **dadurch gekennzeichnet, dass** das Identifikationselement (102, 105, 106, 107) mindestens ein Element ausgewählt aus der Gruppe, bestehend aus RFID-Element (102), Barcode-Element (105), 2D-Code-Element (106), Grafik-Element und Text-Element (107) ist.

11. In-Mold-Flächenelement-Streifen (13) nach Anspruch 9 oder 10, **dadurch gekennzeichnet, dass** jedes In-Mold-Flächenelement (10) mindestens zwei Identifikationselemente (102, 105, 106, 107) aufweist, von denen ein erstes ein RFID-Element (102) ist, das auf der Kontaktseite (108) angebracht ist, und ein zweites ein Barcode-Element (105) oder ein 2D-Code-Element (106) ist, das auf der Oberflächenseite (109) angeordnet ist.

12. In-Mold-Flächenelement-Streifen (13) nach einem der Ansprüche 9 bis 11, **dadurch gekennzeichnet, dass** er rollenförmig ausgebildet ist.

13. In-Mold-Flächenelement-Streifen (13) nach einem der Ansprüche 9 bis 12, **dadurch gekennzeichnet, dass** Liner (12) und haftende Schicht (11) transparent ausgebildet sind.

14. In-Mold-Flächenelement-Streifen (13) nach einem der Ansprüche 9 bis 13, **dadurch gekennzeichnet, dass** die Oberflächenseite (109) des In-Mold-Flächenelements (10) mit einem Lack versehen ist, wobei der Lack die haftende Schicht (11) bildet, mittels derer die In-Mold-Flächenelemente (10) temporär auf dem Liner (12) fixiert sind.

15. In-Mold-Flächenelement-Streifen (13) nach einem der Ansprüche 9 bis 14, **dadurch gekennzeichnet, dass** das Material des Basisträgers (101) des In-Mold-Flächenelements (10) ein wenigstens im wesentlichen gleiches Schrumpfungsverhalten und ein wenigstens im wesentlichen gleiches Schwindungsverhalten aufweist wie der Liner (12).

16. Verwendung des In-Mold-Flächenelement-Streifens (13) nach einem der Ansprüche 9 bis 15 in einem In-Mold-Verfahren nach einem der Ansprüche 1 bis 8.
